(19) Europäisches Patentamt
European Patent Office
Office européen des brevets

(11) EP 1 623 623 A1

(12) **EUROPEAN PATENT APPLICATION**
published in accordance with Art. 158(3) EPC

(43) Date of publication:
**08.02.2006 Bulletin 2006/06**

(21) Application number: **04732740.8**

(22) Date of filing: **13.05.2004**

(51) Int Cl.:
*A01N 25/00* (1985.01) *A01N 31/16* (1985.01)
*A01N 63/00* (1985.01) *A01N 63/02* (1985.01)
*A01N 63/04* (1985.01)

(86) International application number:
**PCT/JP2004/006455**

(87) International publication number:
**WO 2004/100660 (25.11.2004 Gazette 2004/48)**

(84) Designated Contracting States:
**BE DE GB NL SE**

(30) Priority: **13.05.2003 JP 2003134241**

(71) Applicant: **IDEMITSU KOSAN CO., LTD.**
**Tokyo 100-8321 (JP)**

(72) Inventors:
- **SUMI, Kazuo**
  **Sodegaura-shi, Chiba 2990293 (JP)**
- **ISHII, Tomoko**
  **Sodegaura-shi, Chiba 2990293 (JP)**
- **SUZUKI, Motoshi**
  **Sodegaura-shi, Chiba 2990293 (JP)**

(74) Representative: **Bannerman, David Gardner et al**
**Withers & Rogers LLP**
**Goldings House**
**2 Hays Lane**
**GB-London SE1 2HW (GB)**

(54) **ANTIBACTERIAL ANTIVIRAL COMPOSITION**

(57) An environmentally-safe method for protecting plants is provided for reducing the use of chemically-synthesized pesticide. Specifically, an anti-microbial and/or anti-viral composition comprising a laccase, a cell of a laccase-producing microorganism or a treated product thereof, and one or more kinds of phenol derivatives each represented by the general formula (I) shown below or a salt of the phenol derivative is provided. Furthermore, a plant disease-preventing agent, seed-sterilizing agent, post-harvest agent, and nutrient solution-sterilizing agent, each containing the composition; and plant disease-preventing method, seed-sterilizing method, post-harvest-treatment method, and nutrient solution-sterilizing method in hydroponics and solid-medium hydroponics using each f the agents are provided.

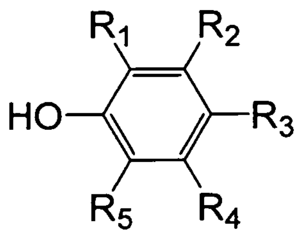

(I)

(in this formula, each of $R_1$ to $R_5$ independently represents hydrogen, an alkyl group having 1 to 6 carbon atoms, substituted or unsubstituted alkenyl group having 2 to 6 carbon atoms, alkoxy group having 1 to 6 carbon atoms, substituted or unsubstituted aryl group having 6 to 20 core carbon atoms, carboxyl group having 1 to 10 carbon atoms, carbonyl group having 1 to 10 carbon atoms, or halogen atom, and at least one of $R_1$ to $R_5$ is an alkenyl group having 1 to 10 carbon atoms; provided that at least one of $R_1$ and $R_5$ is not an alkoxy group).

EP 1 623 623 A1

## Description

[Technical Field]

The present invention relates to: an anti-microbial and/or anti-viral composition; and a plant disease-preventing agent, soil disease-preventing agent, seed-sterilizing agent, and post-harvest agent each containing the composition. Furthermore, the present invention relates to a novel plant disease-preventing method, seed-sterilizing method, post-harvest treatment method, and nutrient solution-sterilizing method in hydroponics and solid-medium hydroponics each using the anti-microbial and/or anti-viral composition of the present invention.

[Background Art]

To stably produce agricultural products, pesticides are necessarily used in crop lands. However, because chemically-synthesized pesticides including chemical substances that are not present in nature have been sprayed to crop lands in large amounts for a long period of time, various adverse effects have appeared. The most severe problem is an effect on humans, animals, and environmental creatures. In recent years, chemically-synthesized pesticides having selective toxicity on creatures have been dramatically developed, so that the toxicities against untargeted creatures have been reduced. However, chemically-synthesized pesticides still involve some risks. In particular, there are concerns about a remaining by-product generated in producing a chemically-synthesized pesticide which may have high toxicity and affect untargeted creatures. Therefore, it has been desired to develop a material that is safe for an environment.
For example, in rice seedling cultivation, as a method of preventing bacteria wilt of rice seedlings, there is known a method comprising preliminarily mixing an agent including 3-hydroxy-5-methylisoxazole(hydroxyisoxazole) or S-(4-methylsulfonyloxyphenyl)-N-methylthiocarbamate(methasulfocarb) as an active ingredient in soil before sowing of seed paddy, a method comprising performing immersion treatment with the agent immediately after sowing or after germination, or the like. However, those methods include many operation steps and require a treatment of the agent after use, so that it has been desired to develop an agent alternative to those chemically-synthesized pesticides.
Meanwhile, to prevent infectious diseases of rice seeds, a variety of seed-sterilizing methods have been employed. In general, to disinfect seeds, there is employed a method comprising immersing seed paddy in a drug solution for a given length of time, or a method including steps of dust coating of seed paddy with an agent, air-drying, and immersion of the seed in stagnant water, but those methods have problems in that the operations are complicated and require much more time. Meanwhile, as a part of labor-saving in rice culture, collaborative raising seedling has been widely performed, but in this case, the amount of a drug solution to be used in disinfecting seeds is large, and the waste liquid must be treated with lime or the like to prevent environmental pollution. Therefore, it has been desired to establish a method alternative to such conventional seed-sterilizing methods.
Meanwhile, for the purpose of preventing pollution due to bacteria or fungus in a post-harvest process, various anti-microbial and anti-fungal agents have been developed. For example, the following agents have been developed: (1) inorganic anti-microbial agents such as silver and zinc; (2) alkaline anti-microbial agents/preservatives such as sintered Ca and sintered Mg; (3) organic anti-fungal agents such as TBZ, OPP, and diphenyl; (4) alcohol-based sterilizing agents; (5) alcohol-based bacterial elimination formulations having sustained effects prepared by adding an anti-microbial ingredient having sustained effects to an alcohol formulation; and (6) chlorine-based sterilizing agents such as sodium hypochlorite. However, many of conventionally used anti-microbial/anti-fungal agents contain ingredients harmful to the human body owing to massive ingestion. Therefore, the conventional anti-microbial/anti-fungal agents have a problem about safety of residual agents.
Moreover, there is known a nutriculture for culturing crops using an aqueous solution containing a nutritional component necessary for a plant (hereinafter, referred to as "nutrient solution") as a substitute for soil. The nutriculture is classified broadly into hydroponics and solid-medium hydroponics. The hydroponics includes water-pooled hydroponics and nutrient film technique (NFT), while the solid-medium hydroponics includes rockwool culture, gravel culture, and sand culture.
The water-pooled hydroponics and nutrient film technique (NFT) each employ a cycle system to reuse a nutrient solution, while the rockwool culture employs a cyclic system or a non-cyclic (flow-through) system, but the system is shifting toward the cyclic system because of environmental problems such as pollution of groundwater or river.
The nutriculture has been studied and developed as a culture method capable of avoiding soil infectious diseases, and it enables to avoid replant failure, and the greatest characteristic thereof is massive crop yields. However, there are no bacteria antagonistic to pathogenic fungi or microorganisms, unlike in the case of the soil culture, so that the damages are huge when pathogenic fungi or microorganisms contaminate in a culture bed or a nutrient solution cyclic system. Moreover, in the nutrient hydroponics, a buffering action is less than that in soil, and pathogenic fungi or microorganisms are apt to be dispersed and have frequent contact with roots. Therefore, once fungi or bacteria contaminate in a nutrient solution, the bacteria are more likely to spread than in soil culture. In general, pathogenic fungi or microorganisms in a

nutrient solution are dispersed in the solution in the form of spores, hyphae, or zoospores and invade a plant from the root, thereby causing root rot or the like. In particular, most of plants in nutriculture may be damaged by bacteria wilt and wilt caused by *Pythium, Rhizoctonia, Fusarium,* and the like. Therefore, it is highly necessary to effectively sterilize pathogenic fungi or microorganisms in a nutrient solution by a sterilization treatment of the nutrient solution, and means for such sterilization have been required.

However, a pesticide registered as a pesticide for hydroponics is only a sterilizing agent prepared by impregnating a cloth with silver, which is referred to as Octcloth (manufactured by Satosen) (registered in February, 2004). However, when the temperature of a nutrient solution is 30°C or higher or when the ammonia concentration or pH in a nutrient solution varies, the sterilizing agent may cause severe drug-induced diseases such as root burn of plants, so that the agent must be used in a gingerly manner. A nutrient solution is frequently exchanged in nutrient hydroponics, so that the use of the sterilizing agent may not be a preferable way to deal with environmental problems such as pollution of groundwater or river, cost, and labor hour.

Meanwhile, as sterilization methods using no pesticide in nutrient hydroponics, sterilization methods each comprising the use of ultraviolet rays, ozone, heating, or the like are known. However, it is difficult to obtain sufficient effects in the case of only using ultraviolet rays, and apparatuses such as a heating apparatus and ozone-generating apparatus have problems such as complicated maintenance and high price.

Therefore, a method of reducing the amount of a chemically-synthesized pesticide to be used in combination with a biologically preventing method, ecologically preventing method, agronomically preventing method, and prophylactically preventing method has been attracting attention. One of the effective means is a method using a microbial pesticide/material, which employs microorganisms present in nature or proteins produced by microorganisms.

As microbial pesticides, there are known a *Talaromyces* formulation for preventing strawberry anthracnose disease, a *Bacillus* formulation for preventing gray filamentous fungus disease, a formulation for preventing napa cabbage soft rot comprising nonpathogenic fungi or napa cabbage soft rot microorganisms, and the like. Although those microbial pesticides have some effects, a stable effect is difficult to be exerted in some cases and the target diseases are limited, so that several kinds of microbial pesticides must be used simultaneously in some cases.

Meanwhile, a method of preventing microorganisms or viruses using a laccase, which is a biological substance, is known (see JP-A-2001-522784). In the method, a preventing composition that contains a laccase and phenol derivative is used. Although the method has some anti-microbial and anti-viral effects regardless of the kinds of microorganisms, when the composition is used for preventing a plant disease, a sufficient effect is not exerted in some cases. Therefore, the method is desired to be further improved.

[Disclosure of the Invention]

As described above, there has been desired an environmentally-sound crop-protecting method to reduce the use of chemically-synthesized pesticides, and microbial pesticides for more wide variety of target diseases to be prevented have been desired. An object of the present invention is to solve these problems.

To solve the above-described problems, the inventors of the present invention found an anti-microbial and/or anti-viral composition, in particular, an anti-microbial and/or anti-viral composition capable of inhibiting the outbreak and spread of a plant pathogenic microorganism and/or viral disease without adversely affecting plants and agricultural products, thereby completed the present invention. Specifically, the inventors of the present invention found that a composition containing a laccase and a phenol derivative having a specific structure has a high anti-microbial and/or anti-viral activity against wide varieties of plant pathogenic fungi or microorganisms and/or viruses. The present invention has been accomplished based on such findings.

That is, the present invention is as follows.

(1) An anti-microbial and/or anti-viral composition comprising a laccase, a cell of a laccase-producing microorganism or a treated product thereof, and one or more kinds of phenol derivatives represented by the following general formula (I) or a salt thereof:

[Chemical formula 1]

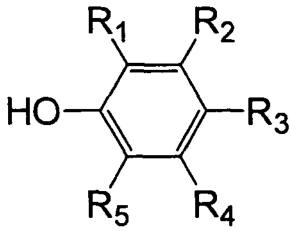

(I)

(in this formula, each of $R_1$ to $R_5$ independently represents hydrogen, an alkyl group having 1 to 6 carbon atoms, substituted or unsubstituted alkenyl group having 2 to 6 carbon atoms, alkoxy group having 1 to 6 carbon atoms, substituted or unsubstituted aryl group having 6 to 20 core carbon atoms, carboxyl group having 1 to 10 carbon atoms, carbonyl group having 1 to 10 carbon atoms, or halogen atom, and at least one of $R_1$ to $R_5$ is an alkenyl group having 1 to 10 carbon atoms; provided that at least one of $R_1$ and $R_5$ is not an alkoxy group).

(2) The anti-microbial and/or anti-viral composition according to (1), wherein $R_3$ in the general formula (I) is represented by the following general formula (II):

[Chemical formula 2]

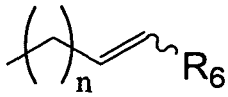

(II)

(in this formula, $R_6$ represents a hydrogen atom, halogen atom, alkyl group having 1 to 4 carbon atoms, alkoxy group having 1 to 4 carbon atoms, or carbonyl group having 1 to 4 carbon atoms and may be in a cis or trans position, and n represents an integer of 0 or 1).

(3) The anti-microbial and/or anti-viral composition according to (1) or (2), wherein said microorganism is a filamentous fungus or bacterium:

(4) The anti-microbial and/or anti-viral composition according to (3), wherein said filamentous fungus is a basidiomycete or wood-destroying fungus.

(5) The anti-microbial and/or anti-viral composition according to (1) or (2), wherein said microorganism is a fungus or bacterium that belongs to any one of the genera *Trametes, Schizophyilum, Phanerochaete, Bjerkandera, Irpex, Pleurotus, Myceliophthora, Lentinera, Pycnoporus, Lentinus, Rhizoctonia, Funalia, Merulius, Coprinus, Agaricus, Phoriota, Flammulona, Ganoderma, Daedaleopsis, Favolus, Lyophylum, Auricularia, Gloeophyllum, Tyromyces, Coniophora, Heterobasidion, Fomes, Chaetomium, Neurospora, Sclerotium, Humicola*, *Monilia, Xylalia, Cladorrhinum, Graphium, Scopularipsis, Sphaeropsis, Fusarium, Trichoderma, Botrytis, Aspergillus, Acremonium,* and *Bacillus.*

(6) A plant disease-preventing agent, which comprises the anti-microbial and/or anti-viral composition according to any one of (1) to (5).

(7) A seed-sterilizing agent, which comprises the anti-microbial and/or anti-viral composition according to any one of (1) to (5).

(8) A post-harvest agent, which comprises the anti-microbial and/or anti-viral composition according to any one of (1) to (5).

(9) A method of preventing a plant disease, which comprises applying the plant disease-preventing agent according to (6) to a plant or soil for culturing a plant.

(10) A method of disinfecting a plant seed, which comprises treating a seed with the seed-sterilizing agent according to (7).

(11) A post-harvest treatment method, which comprises treating a field crop with the post-harvest agent according to (8).

(12) A method of preventing a plant disease, which comprises applying the plant disease-preventing agent according to (6) to a plant in hydroponics or solid-medium hydroponics, or a nutrient solution for hydroponics or a nutrient solution for a solid-medium hydroponics from which solid medium components have been removed.

Hereinafter, at least one of the anti-microbial activity and the anti-viral activity is sometimes referred to as

"anti-microbial/anti-viral activity" in the present description.

According to the present invention, a composition comprising a laccase, a cell of a laccase-producing microorganism or a treated product thereof and a specific phenol derivative is provided. Because the composition of the present invention has an anti-microbial/anti-viral activity, the use of the composition enables effective inhibition of various plant pathogenic fungi or microorganisms and/or viral diseases, and a novel method of protecting plants such as field crops against diseases is provided. Moreover, it becomes possible to reduce the use of chemical pesticides by: applying a plant disease-preventing agent containing the composition to a plant, soil for culturing a plant, or the like; treating seeds with a seed-sterilizing agent containing the composition; applying a post-harvest agent containing the composition to a field crop; or applying a plant disease-preventing agent containing the composition to a plant in hydroponics or solid-medium hydroponics, or a nutrient solution for hydroponics or a nutrient solution for a solid-medium hydroponics from which solid medium components have been removed. Moreover, a novel microbial pesticide that is effective for wide variety of plant diseases and exerts an excellent effect is provided.

[Description of the preferred embodiments]

The anti-microbial and/or anti-viral composition of the present invention (hereinafter also simply referred to as "composition of the present invention") contains a laccase, a cell of a laccase-producing microorganism or a treated product thereof, and one or more kinds of phenol derivatives represented by the above-described general formula (I) or a salt thereof (hereinafter also simply referred to as "phenol derivative").

The kind of the "laccase" (E.C. 1.10.3.2) to be used in the present invention is not particularly limited as long as the laccase exerts an anti-microbial/anti-viral activity together with the above-described phenol derivative, and an enzyme derived from a plant, microorganism such as a bacterium, filamentous fungus, or yeast, or animal may be used. Meanwhile, the laccase may be not only a naturally derived laccase but also a recombinant or mutant produced by a gene recombination technique.

In the present invention, the "laccase-producing microorganism" includes filamentous fungi such as basidiomycetes or wood-destroying fungi, or bacteria belonging to genus *Bacillus,* which produce laccase. An example of the laccase-producing microorganism preferably includes fungus or bacterium that belongs to any one of the genera *Trametes, Schizophyilum, Phanerochaete, Bjerkandera, Irpex, Pleurotus, Myceliophthora, Lentinera, Pycnoporus, Lentinus, Rhizoctonia, Funalia, Merulius, Coprinus, Agaricus, Phoriota, Flammulona, Ganoderma, Daedaleopsis, Favolus, Lyophylum, Auricularia, Gloeophyllum, Tyromyces, Coniophora, Heterobasidion, Fomes, Chaetomium, Neurospora, Sclerotium, Humicola, Monilia, Xylalia, Cladorrhinum, Graphium, Scopularipsis, Sphaeropsis, Fusarium, Trichoderma, Botrytis, Aspergillus, Acremonium,* and *Bacillus.*

The phrase "a cell of a laccase-producing microorganism or a treated product thereof" in the present invention refers to, for example, a cell of a microorganism belonging to any of the above-described microorganisms, or a homogenized product, extract, or fractionated product thereof. One embodiment of the "treated product" includes a treated product obtained by homogenizing a cultured solution of a filamentous fungus to cut the hyphae.

Meanwhile, the "laccase" in the present invention may be a purified enzyme isolated from microorganisms or crudely purified enzyme, and suitable examples thereof include a laccase released from cells of any of the above-described microorganisms.

The composition of the present invention may contain one or plural kinds of laccases and/or a cell of a microorganism that produces one or plural kinds of laccases or a treated product thereof.

The phenol derivative used in the present invention has a specific structure represented by the above-described general formula (I). The phenol derivative is preferably a phenol derivative represented by the above-described general formula (I) in which $R_3$ is represented by the above-described general formula (II). The phenol derivative more preferably includes a phenol derivative represented by the following structural formula (III).

[Chemical formula 3]

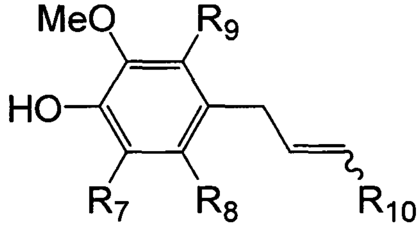

(III)

(In the formula, each of $R_7$ to $R_{10}$ independently represents hydrogen or an alkyl group having 1 to 6 carbon atoms.)

The phenol derivative further more preferably includes a phenol derivative represented by the above-described structural formula (III) in which $R_7$ to $R_9$ represent hydrogen, and $R_{10}$ represents hydrogen, a methyl group, or ethyl group.

In addition, the phenol derivative represented by the general formula (I) may form a salt. Examples of the salt may include an alkaline metal salt, alkaline earth metal salt, and ammonium salt. Examples of a preferable salt include a sodium salt, potassium salt, ammonium salt, and calcium salt.

The composition of the present invention may be formulated by a general method except that it contains the above-described laccase or cells of the laccase-producing microorganism or treated product thereof, and phenol derivative. That is, the composition may be formulated together with various optional ingredients if necessary. Examples of its dosage form include a liquid, powder, granule, emulsion, lubricant, capsule, water-dispersible powder, liniment, and flowable. In formulating the composition, a liquid carrier, solid carrier, surfactant (including an emulsion, dispersant, or antifoamer), adjuvant, and the like may be used.

Examples of the liquid carrier to be used include water, a plant oil, liquid animal oil, phosphate buffer, carbonate buffer, and physiological saline. Examples of the solid carrier to be used include: natural mineral powder including cation clay, pyrophyllite clay, bentonite, montmorillonite, kaolin, clay, talc, chalk, quartz, attapulgite, and diatom earths; synthetic mineral powder including silicic acid, alumina, and silicate; and macro-molecule natural product including crystalline cellulose, corn starch, gelatin, and alginic acid. Of those liquid carriers and/or solid carriers, only one kind of carrier may be used, or two or more kinds of them may be used in combination.

Examples of an available surfactant include a polyoxyethylene-fatty acid ester, polyoxyethylene-fatty acid alcohol ether, alkylarylpolyglycolether, alkylsulfonate, alkylsulfate, and arylsulfonate.

Examples of an available adjuvant include carboxymethylcellulose, polyoxyethyleneglycol, glycerin, gum arabic, starch, and lactose.

In a specific embodiment of the present invention, the composition of the present invention may be a liquid formulation comprising an aqueous solvent as a carrier. In the case that such a liquid formulation is produced, a water-soluble polymer is preferably added to improve a hydration ability of a mixture in the solvent. Examples of the water-soluble polymer include polyvinyl alcohol, polyethylene glycol, polyvinylmethylether, polyvinylamine, polyvinylpyrrolidone, polyethyleneimine, and polyacrylamide. Moreover, polysaccharides such as xyloglucan and guar gum are preferably added to improve the adherability of the composition to a plant and to enhance the stability of the laccase in a formulation.

The concentration of a laccase in the composition of the present invention may be any concentration, and is preferably 0.0001 to 10% by weight, more preferably 0.01 to 1 % by weight. The concentration of a laccase-producing microorganism may be any concentration, and is preferably $10^2$ to $10^{11}$ cfu/g formulation, more preferably $10^5$ to $10^8$ cfu/g formulation.

The concentration of a phenol derivative in the composition of the present invention may be any concentration, and is preferably 0.0001 to 1 % by weight, more preferably 0.001 to 0.1% by weight.

The composition of the present invention has an anti-microbial/anti-viral activity and may be used, for example, as a plant disease-preventing agent, seed-sterilizing agent, post-harvest agent, or nutrient solution-sterilizing agent in hydroponics or solid-medium hydroponics. In the case that the composition of the present invention is used for preventing a plant disease, any application method may appropriately be selected depending on its dosage form, usage mode such as the dosage form, kind of a target crop, and kind of a target disease and/or kind of virus.

Examples of such methods include: a method comprising applying the composition of the present invention to a plant or soil for culturing a plant; method comprising treating seeds with the composition of the present invention; method comprising treating an agricultural product after harvesting with the composition of the present invention; and method comprising applying the composition of the present invention to a plant in hydroponics or solid-medium hydroponics, or a nutrient solution for hydroponics or a nutrient solution for a solid-medium hydroponics from which solid medium components has been removed. Herein, "applying the composition of the present invention to soil" or "applying the composition of the present invention to a nutrient solution" includes separately applying each component of the composition (for example, a laccase, a cell of a laccase-producing microorganism or a treated product thereof, and a phenol derivative) to constitute the composition in soil or a nutrient solution. Specific examples of an application/treatment method include a ground liquid spray method, ground solid spray method, aerial liquid spray method, aerial solid spray method, submerged application method, interior application method, surface treatment method (including seed dressing treatment and seed coating treatment), nursery box application method, uniflower treatment method, and plant foot treatment method.

Preferable examples of the application method include a method comprising coating a seed of a cultured plant, method comprising uniflower treatment of a flower of a cultured plant, method comprising treating a stem and leaf of a cultured plant, and method comprising coating a wound portion or pruned portion of a cultured plant, with a sterilizing composition for agriculture and gardening that may have various dosage forms. In the case that the composition of the present invention is used as a post-harvest agent, a method comprising spraying a water-dispersible powder prepared using

the composition of the present invention before storage or before transportation of harvests, a method comprising immersing harvests in a water-dispersible powder, or the like may be employed.

In the case that the composition of the present invention is used as a plant disease-preventing agent to sterilize a nutrient solution, the composition may be used for sterilizing a nutrient solution for hydroponics and for sterilizing a nutrient solution for a solid-medium hydroponics from which solid medium components has been removed (for example, by sand filtration). The composition of the present invention may be used for sterilization of a nutrient solution at any time, such as 1) regular prophylactic sterilization at a low concentration (the concentration of the laccase and phenol derivative is 0.01 wt% or less), 2) pre-sterilization for urgently inhibiting expansion of a disease after recognition of the outbreak of pathogenic fungi or microorganisms at a low concentration ($10^3$ to $10^4$ cfu/ml), or 3) sterilization of a nutrient solution after serious outbreak of pathogenic microorganisms. Meanwhile, the composition may be used for sterilization by adjusting the concentration of the composition of the present invention depending on the outbreak situation of a disease. Moreover, sterilization may be performed effectively in a short period of time, for example, by adjusting the pH of a nutrient solution to 5.0 to 6.0 or by adjusting the temperature of a nutrient solution to 30 to 35°C.

The hydroponics may be performed in an apparatus for hydroponics, and, for example, the following method may be used as a specific sterilization method in an apparatus for hydroponics. In the case of hydroponics in 10 ares of ground, 10 t of a nutrient solution is used. A half of the nutrient solution (5 t) is impounded in a reserve tank, and the other half is circulated to the roots of cultured plants. In the case of the outbreak or severe outbreak of pathogenic fungi or microorganisms in the nutrient solution, the composition of the present invention is added to the nutrient solution in the reserve tank, and the mixture is stirred for about 30 minutes independently from a recycle loop to almost entirely sterilize the pathogenic fungi or microorganisms in the reserve tank. Meanwhile, as a method of improving effectiveness of sterilization, the following procedures may be performed: pH of the nutrient solution is adjusted with phosphoric acid or the like to 5.0 to 6.0, preferably to 5.5, the nutrient solution is treated with the composition of the present invention, and the pH is returned to approximately neutral with potassium bicarbonate or the like after completion of sterilization. Thereafter, when the tank is connected to the recycle loop, influence on the plant roots can be kept to the minimum. To sterilize all pathogenic fungi or microorganisms in 10 t of the nutrient solution, it is necessary to repeat a batch treatment using a 5-t reserve tank 5 to 6 times. Meanwhile, the concentration of the composition of the present invention may be changed depending on the outbreak situation of pathogenic fungi or microorganisms in the nutrient solution.

Moreover, as a regular sterilization method using the composition of the present invention, the following procedures may be performed: when the composition of the present invention is periodically added to 10 t of a nutrient solution for hydroponics in 10 ares of ground to maintain the total concentration of a laccase and phenol derivative at a low concentration (for example, about 0.01 to 0.001 wt%) and to sterilize pathogenic fungi or microorganisms in the nutrient solution, the concentration of microorganisms including pathogenic fungi or microorganisms in the nutrient solution may be suppressed to $10^3$ cfu/ml or less. The laccase enzyme is relatively stably present in a nutrient solution (although depending on a temperature or concentration of microorganisms in a nutrient solution, the half-life period is about 2 to 14 days), so that once the composition of the present invention is added, only a phenol derivative (for example, eugenol) may be replenished periodically until the concentration of the laccase enzyme is lowered to 30% or less of the initial concentration, which enables continuous sterilization while saving the cost.

In the case that the composition of the present invention is applied as a sterilizing composition for agriculture and gardening to a cultured plant or soil for culturing a plant, or a nutrient solution for hydroponics or solid-medium hydroponics, any other agent may be applied in combination with the composition of the present invention, or separately applied without mixing, or simultaneously applied. Examples of the other agent include an insecticide, nematicide, miticide, herbicide, microbicide, plant growth regulator, fertilizer, and soil-improving material (including peat, corrosive acid material, and polyvinyl alcohol-based material).

The composition of the present invention exhibits a non-selective anti-microbial/anti-viral activity, so that it may be applied to wide variety of diseases or viruses. Examples of diseases for which the composition is particularly effective include powdery mildew of *Cucurbitaceae* plants (scientific name of the pathogen: *Sphaer otheca fuliginea*)*,* gray filamentous fungus of various vegetables and petals (scientific name of the pathogen: *Botrytis cinerea),* tomato powdery mildew (scientific name of the pathogen: *Oidium violae,* etc.), bacteria wilt of tomato and eggplant plants (scientific name of the pathogen: *Pseudomonas solanacearm),* strawberry powdery mildew (scientific name of the pathogen: *Sphaerotheca macularis),* and rose powdery mildew (scientific name of the pathogen: *Sphaerotheca ponnosa),* and the composition may be applied to wide variety of diseases.

In addition, the composition of the present invention also has effects on diseases from sap transmission plant viruses and organism mediating transmission plant viruses. Those plant viruses include a tobacco mosaic virus (TMV), tobacco rattle virus, tobacco stunt virus (TStuV), tobacco leaf curl virus (VLCV), tobacco nervilia mosaic virus (TVBMV), tobacco necrotic dwarf virus (TNDV), tobacco streak virus (TSV), potato virus X (PVX), potato viruses Y, S, M, and A, potato acuba mosaic virus (PAMV), potato mop-top virus (PMTV), potato leaf-roll virus (PLRV), alfalfa mosaic virus (AMV), cucumber mosaic virus (CMV), cucumber green mottlemosaic virus (CGMMV), cucumber yellows virus (CuYV), watermelon mosaic virus (WMV), tomato spotted wilt virus (TSWV), tomato ringspot virus (TomRSV), sugarcane mosaic

virus (SCMV), rice drawf virus, rice stripe virus, rice black-streaked drawf virus, strawberry mottle virus (SMoV), strawberry vein banding virus (SVBV), strawberry mild yellow edge virus (SMYEV), strawberry crinkle virus (SCrV), broad beanwilt virus (BBWV), and melon necrotic spot virus (MNSV).

The terms "anti-microbial" and "anti-viral" in the present invention have a meaning that is generally understood by a person skilled in the art, and the term "anti-microbial" includes a meaning of sterilization or growth inhibition of fungi or bacteria, while the term "anti-viral" includes a meaning of inhibition of viral proliferation and inhibition of outbreak of viral diseases.

<Examples>

Hereinafter, the present invention will be described more specifically by way of examples, but the scope of the present invention is not limited thereto.

<Example 1>

10 mg of a laccase enzyme purified by the same method as described in JP-A-2001-522784 was dissolved in 10 cc of deionized water (0.1% by weight solution), and eugenol represented by the following structural formula (IV) and methyl syringate represented by the structural formula (V) were respectively mixed at a concentration of 0.01 % by weight, to thereby prepare two kinds of anti-microbial/anti-viral compositions.

[Chemical formula 4]

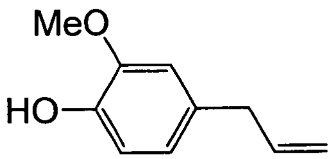 · · · (IV) 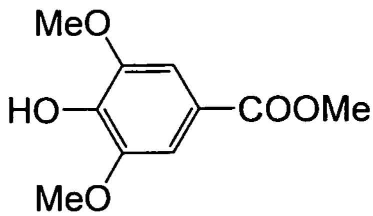 · · · (V)

The resultant two kinds of compositions were impregnated in paper discs each having a diameter of 8 mm, and the paper discs were placed on a sucrose-potato agar plate medium innoculated with various plant pathogenic microorganisms, followed by culture at 25°C. After one week, the sizes of inhibition zones formed around the paper discs were determined. The results are shown in Table 1. Those results showed that both compositions had anti-microbial activities against various pathogenic microorganisms.

[Table 1]

| Test plant pathogenic microorganisms | Size of inhibition zone | |
|---|---|---|
| | Laccase + Eugenol | Laccase + Methyl syringate |
| Damping-off bacteria | ++ | + |
| Sesame leaf blight fungus | ++ | - |
| Blast fungus | + | + |
| Leaf blight fungus | +++ | - |
| Root rot wilt microorganism | +++ | + |
| Half body wilt microorganism | ++ | ++ |
| Purpura fungus | ++ | + |
| Sen-byo microorganism | +++ | ++ |
| Fusarium head blight fungus | ++ | - |
| Gray filamentous fungus fungus | +++ | ++ |
| Soft rot bacteria | +++ | - |

Table continued

| Test plant pathogenic microorganisms | Size of inhibition zone | |
|---|---|---|
| | Laccase + Eugenol | Laccase + Methyl syringate |
| Crown gall bacteria | +++ | ++ |
| Kurofushi-byo bacteria | +++ | ++ |
| Leaf scald bacteria | +++ | + |
| -;No inhibition zone, +;Diameter of less than 2 cm, ++; Diameter of 2 to less than 4 cm, +++; Diameter of 4 cm or more | | |

<Example 2>

24 g of potato dextrose was dissolved in 11 of tap water to prepare a liquid medium, and 50 ml of the medium was poured in a Meyer flask having an inner volume of 250 ml. After the flask had been sealed with a silico plug, a sterilization treatment was performed at 121 °C for 20 minutes. Thereafter, the Meyer flask was cooled to room temperature, and one platinum loop of *Schizophilum commune* (IFO6505) serving as a laccase-producing microorganism was inoculated. Subsequently, the culture medium was statically cultured at 28°C for 14 days.

For the culture medium of the cultured *Schizophilum commune* (IFO6505), hyphae were cut using a homogenizer, and water was added to adjust the concentration to $10^8$ cfu/g formulation. Eugenol (0.01% by weight), calcium ligninsulfonate (3% by weight), and sodium lauryl sulfate (2% by weight) were added thereto, and mixed to prepare water-dispersible powder containing microbial cell-treated products.

For the thus-obtained water-dispersible powder, the preventive effect on tomato gray filamentous fungus was tested. The test was performed by culturing tomato plants in a glass greenhouse where an orange fruit infected with gray filamentous fungus microorganisms was hung. Zuiken (Brand name) was used as the tomato plants. One test section contained 12 plants.

In the third cluster flowering time of the tomato plants, the above-described water-dispersible powder was sprayed in an application amount of 200 L/10a, three-day-interval, three times in total (foliage spray treatment). Seven days after the last spraying, diseased fruits and diseased flowers were determined. On the other hand, for the tomatoes not treated with the above-described water-dispersible powder, the test was performed in the same way as described above, and the diseased fruits and diseased flowers were determined. The disease level and disease-preventing value were calculated according to the following equations (1) and (2). The disease-preventing value was 70%.

[Equation 1]

Disease level = ∑(number of diseased plant section in each level × disease index)/(number of evaluated plant section × 4) ··· Equation (1)

[Equation 2]

Disease-preventing value (%) = (1 − (disease level of test section/disease level of untreated section) × 100 ··· Equation (2)

As a control, the same test was performed by replacing the above-described water-dispersible powder comprising laccase-producing microorganism with commercially-available Basitac (product name, main ingredient; mepronil, manufactured by Kumiai Chemical Industry Co., Ltd., 1,500 ppm), and the disease-preventing value was calculated in the same way. The disease-preventing value in this test was 80%.

<Example 3>

Instead of the above-described water-dispersible powder containing a laccase-producing microorganism, 10

mg of the laccase enzyme purified by the same method as that described in JP-A-2001-522784 was dissolved in 10 cc of water at a concentration of 0.1 % by weight. Then, eugenol, calcium ligninsulfonate, and sodium lauryl sulfate were added at concentrations of 0.01% by weight, 3% by weight, and 2% by weight, respectively, followed by mixing. The resultant water-dispersible powder was used to perform the same test as that of Example 2. The disease-preventing value was 75%.

<Example 4>

Unhulled rice was obtained from infected seedings which had been obtained by inoculating rice Bakanae disease microorganisms (*Gibberella fujikuroi*) to rice plants in the flowering time. Rice Momigare disease microorganisms *(Pseudomonas glumae)* was inoculated to the unhulled rice, followed by immersion in two solutions prepared in Example 1. Thereafter, 4.5 g of the above-described unhulled rice per pot was seeded into two plastic pots filled with moulding for raising seedlings. Subsequently, the pots were maintained in a nursery cabinet at 30°C for three days, and the plants were cultured in a greenhouse for 14 days. The disease conditions were evaluated, and the morbidity level was calculated from the following equation (3).

[Equation 3]

$$\text{Morbidity level (\%)} = (\text{morbidity in treated section/ morbidity in untreated section}) \times 100 \cdots \text{Equation (3)}$$

The results are shown in Table 2. The morbidity level of 0 means that the plants do not have diseases, while the morbidity level of 100 means that the plants are in the same condition as that of the control group treated with no agents.

[Table 2]

| Applied test agents | | Bakanae disease(%) | | Momigare disease (%) | |
|---|---|---|---|---|---|
| | Number of evaluated seedlings | Morbidity of seedlings | Morbidity level | Morbidity of seedlings | Morbidity level |
| Laccase + eugenol | 250 | 2.3 | 3 | 1.3 | 7 |
| Laccase + methyl syringate | 263 | 7.8 | 9 | 5.6 | 30 |
| Untreated section | 243 | 85 | 100 | 18.6 | 100 |

<Example 5>

Pepper mild mottle virus (PMMV) was used as a test subject. Bell pepper plants were artificially infected with PMMV, and four weeks later, several leaves and radicles exhibiting symptoms were collected and dried at room temperature for about two weeks. Thereafter, 1 g of the material leaves and 1 g of the roots were weighed and added into 1 1 of water in a beaker. Moreover, a laccase enzyme (1 g) purified in the same way as described in JP-A-2001-522784 and eugenol (0.1 g) were added. After addition, treatment was performed for a predetermined time (30 minutes, two hours), and the leaves and roots were taken out and washed with water to stop the action of the composition. After washing with water, the leaves and roots were homogenized. The homogenate obtained by each treatment was inoculated to respective three leaves of three test plants (leaf tobacco). If viruses remain in the inoculated materials, topical lesions appear in the inoculated leaves.

Five days after the inoculation, the number of the lesions was counted. For each treatment, the number of lesions in nine leaves was counted. The sterilization rate was calculated through comparison with untreated plants. The results are shown in Table 5.

[Table 3]

| Applied test agents | Number of lesions in each exposed time 30 minutes | 2 hours | Sterilization rate in each exposed time (%) 30 minutes | 2 hours |
|---|---|---|---|---|
| Laccase + eugenol | 50 | 15 | 97 | 99 |
| Laccase + methyl syringate | 321 | 78 | 79 | 95 |
| Untreated section | 1523 | | | |

<Example 6>

100 ml of a nutrient solution used in hydroponics of tomato plants (prepared by dissolving 8 g of potassium nitrate, 9.45 g of calcium nitrate, 5 g of magnesium sulfate, and 1.5 g of ammonium phosphate in 10 L of water) was subjected to a high-pressure steam sterilization treatment at 120°C for 20 minutes. Soft rot microorganism (Erwinia carotovorasp. carotvora) and tomato wilt microorganism (small conidia of Fusarium oxysporum f. lycopersici) were added into the sterilized nutrient solution, to thereby prepare a solution having a concentration of $10^5$ cfu/ml.
A laccase enzyme (purified by the method described in JP-A-2001-522784) and eugenol were added to the prepared solution so that each of them would have a concentration of 0.01 wt%. After a lapse of a predetermined time (1, 5, 10, 20, and 30 minutes) from the addition, each solution was diluted 1,000-fold and applied on a general agar medium, and the number of the microorganisms was calculated by the dilution plate method. The results are shown in Table 4.

<Comparative Example 1>

A double-channel flushing bactericidal lamp having an ultraviolet power of 1.7 W and a lamp power of 13 W was used for exposing ultraviolet (main wavelength: 254 nm) to a prepared solution containing $10^5$ cfu/ml of Soft rot microorganisms (Erwinia carotovorasp. carotvora) and tomato wilt microorganisms (small conidia of Fusarium oxysporum f. lycopersici), which had been prepared in the same way as Example 6. After ultraviolet exposure, the cultured solution was stirred, and the sterilization effects were determined by the dilution plate method in the same way as Example 6. The results are shown in Table 4.

[Table 4]

| Test agents | Elapsed time or ultraviolet exposure time (minute) 1 | 5 | 10 | 20 | 30 |
|---|---|---|---|---|---|
| Untreated section | $10^5$ | $10^5$ | $10^5$ | $10^5$ | $10^5$ |
| 0.01 wt% laccase + 0.01 wt% eugenol | 10 | 0 | 0 | 0 | 0 |
| Ultraviolet treatment | 50 | 10 | 0 | 0 | 0 |

The values in the table are represented in CFU/ml units.

The results shown in Table 4 showed that the composition of the present invention effectively sterilized pathogenic fungi or microorganisms in the nutrient solution, which had been considered to be a problem in nutrient hydroponics. Therefore, the composition can prevent plant diseases of plants cultured in nutrient hydroponics.

## Claims

1. An anti-microbial and/or anti-viral composition comprising a laccase, a cell of a laccase-producing microorganism or a treated product thereof, and one or more kinds of phenol derivatives represented by the following general formula (I) or a salt thereof:

[Chemical formula 1]

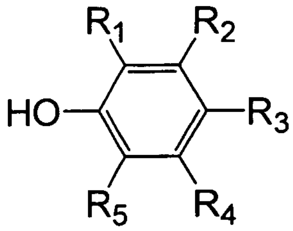

(I)

(in this formula, each of $R_1$ to $R_5$ independently represents hydrogen, an alkyl group having 1 to 6 carbon atoms, substituted or unsubstituted alkenyl group having 2 to 6 carbon atoms, alkoxy group having 1 to 6 carbon atoms, substituted or unsubstituted aryl group having 6 to 20 core carbon atoms, carboxyl group having 1 to 10 carbon atoms, carbonyl group having 1 to 10 carbon atoms, or halogen atom, and at least one of $R_1$ to $R_5$ is an alkenyl group having 1 to 10 carbon atoms; provided that at least one of $R_1$ and $R_5$ is not an alkoxy group).

**2.** The anti-microbial and/or anti-viral composition according to claim 1, wherein $R_3$ in the general formula (I) is represented by the following general formula (II):

[Chemical formula 2]

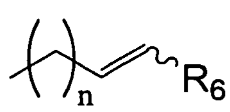

(II)

(in this formula, $R_6$ represents a hydrogen atom, halogen atom, alkyl group having 1 to 4 carbon atoms, alkoxy group having 1 to 4 carbon atoms, or carbonyl group having 1 to 4 carbon atoms and may be in a cis or trans position, and n represents an integer of 0 or 1).

**3.** The anti-microbial and/or anti-viral composition according to claim 1 or 2, wherein said microorganism is a filamentous fungus or bacterium.

**4.** The anti-microbial and/or anti-viral composition according to claim 3, wherein said filamentous fungus is a basidiomycete or wood-destroying fungus.

**5.** The anti-microbial and/or anti-viral composition according to claim 1 or 2, wherein said microorganism is a fungus or bacterium that belongs to any one of the genera *Trametes, Schizophyilum, Phanerochaete, Bjerkandera, Irpex, Pleurotus, Myceliophthora, Lentinera, Pycnoporus, Lentinus, Rhizoctonia, Funalia, Merulius, Coprinus, Agaricus, Phoriota, Flammulona, Ganoderma, Daedaleopsis, Favolus, Lyophylum, Auricularia, Gloeophyllum, Tyromyces, Coniophora, Heterobasidion, Fomes, Chaetomium, Neurospora, Sclerotium, Humicola, Monilia, Xylalia, Cladorrhinum, Graphium, Scopularipsis, Sphaeropsis, Fusarium, Trichoderma, Botrytis, Aspergillus, Acremonium,* and *Bacillus.*

**6.** A plant disease-preventing agent, which comprises the anti-microbial and/or anti-viral composition according to any one of claims 1 to 5.

**7.** A seed-sterilizing agent, which comprises the anti-microbial and/or anti-viral composition according to any one of claims 1 to 5.

**8.** A post-harvest agent, which comprises the anti-microbial and/or anti-viral composition according to any one of claims 1 to 5.

**9.** A method of preventing a plant disease, which comprises applying the plant disease-preventing agent according to claim 6 to a plant or soil for culturing a plant.

**10.** A method of disinfecting a plant seed, which comprises treating a seed with the seed-sterilizing agent according to claim 7.

**11.** A post-harvest treatment method, which comprises treating a field crop with the post-harvest agent according to claim 8.

**12.** A method of preventing a plant disease, which comprises applying the plant disease-preventing agent according to claim 6 to a plant in hydroponics or solid-medium hydroponics, or a nutrient solution for hydroponics or a nutrient solution for a solid-medium hydroponics from which solid medium components have been removed.

## INTERNATIONAL SEARCH REPORT

International application No.
PCT/JP2004/006455

A. CLASSIFICATION OF SUBJECT MATTER
Int.Cl[7] A01N25/00, 31/16, 63/00, 63/02, 63/04

According to International Patent Classification (IPC) or to both national classification and IPC

B. FIELDS SEARCHED

Minimum documentation searched (classification system followed by classification symbols)
Int.Cl[7] A01N25/00, 31/16, 63/00, 63/02, 63/04

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 99/23887 A1 (NOVO NORDISK AKTIESELSXAB), 20 May, 1999 (20.05.99), Full text & EP 1030561 A & US 6228128 B1 & JP 2001-522784 A | 1-12 |
| A | JP 60-146803 A (Kiyoshi SAOTOME), 02 August, 1985 (02.08.85), Full text (Family: none) | 1-12 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 July, 2004 (14.07.04) | 03 August, 2004 (03.08.04) |
| Name and mailing address of the ISA/ Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2004/006455

Whether the active ingredient in claims 1-12 is a phenol derivative changed by laccase (radical being an active ingredient) or one not changed thereby (mere mixture of a phenol derivative and laccase) is ambiguous. Consequently, the relationship between claims 1-12 and prior art (novelty and inventive step) cannot be clearly determined.

Further, under the assumption that the phenol derivative is one changed by laccase, it cannot be cognized that all the "phenol derivatives changed by laccase" of claims 1-12 similarly exhibit antibacterial activity (not satisfying the requirements of PCT Article 5 and Article 6).

This international search report has been established on the tentative assumption that the phenol derivative is one changed by laccase inasmuch as this international application can be considered as relating to the technology of WO 99/23887. Phenol derivatives on which search has been conducted are those disclosed in and supported by the description, namely, compounds of the general formula (I) wherein substituent $R_1$ or $R_5$ is alkoxy, $R_2$ and $R_4$ are hydrogens and $R_3$ is a compound of the general formula (II).